(19) **Europäisches Patentamt**
**European Patent Office**
**Office européen des brevets**

(11) **EP 1 103 801 B1**

(12) **EUROPEAN PATENT SPECIFICATION**

(45) Date of publication and mention
of the grant of the patent:
**14.06.2006 Bulletin 2006/24**

(51) Int Cl.:
**G01J 5/00** (2006.01)      **G01J 5/08** (2006.01)

(21) Application number: **00310142.5**

(22) Date of filing: **15.11.2000**

(54) **Temperature measuring method**

Verfahren zum Messen einer Temperatur

Méthode pour mesurer une température

(84) Designated Contracting States:
**AT BE CH CY DE DK ES FI FR GB GR IE IT LI LU MC NL PT SE TR**

(30) Priority: **29.11.1999 GB 9928171**

(43) Date of publication of application:
**30.05.2001 Bulletin 2001/22**

(73) Proprietor: **Land Instruments International Limited**
**Dronfield,**
**Sheffield S18 1DJ (GB)**

(72) Inventors:
 • **Metcalfe, Stuart Francis**
 **Sheffield,**
 **S. Yorks S12 3HW (GB)**
 • **Wright, Paul**
 **Sheffield,**
 **S Yorks S11 8QE (GB)**
 • **Tune, Andrew David**
 **Dronfield,**
 **Derbyshire S18 6GZ (GB)**

(74) Representative: **Skone James, Robert Edmund**
**Gill Jennings & Every LLP**
**Broadgate House**
**7 Eldon Street**
**London EC2M 7LH (GB)**

(56) References cited:
**EP-A- 0 942 269          DE-U- 8 815 494**
**GB-A- 2 068 109          US-A- 5 326 173**

• TYCHOWSKY V W ET AL: "DEVELOPMENT AND APPLICATION OF A GOLD CUP SENSOR FOR MEASUREMENT OF STRIP TEMPERATURES ON A CONTINUOUS GALVANIZING LINE" IRON AND STEEL ENGINEER,US,ASSOCIATION OF IRON AND STEEL ENGINEERS. PITTSBURGH, vol. 75, no. 9, 1 September 1998 (1998-09-01), pages 37-42, XP000788069 ISSN: 0021-1559
• KIRBY P J: "MEASURING HOT METALS ON THE MOVE" I & CS - INDUSTRIAL AND PROCESS CONTROL MAGAZINE,US,CHILTON COMPANY. RADNOR, PENNSYLVANIA, vol. 65, no. 6, 1 June 1992 (1992-06-01), pages 25-28, XP000307173 ISSN: 1074-2328
• DAN EVANS ET AL: "NON CONTACT SENSOR FOR ALUMINUM ROLLING MILLS" ADVANCES IN INSTRUMENTATION AND CONTROL,US, INSTRUMENT SOCIETY OF AMERICA, RESEARCH TRIANGLE PARK, vol. 49, no. PART 03, 23 October 1994 (1994-10-23), pages 1153-1163, XP000509018 ISSN: 1054-0032
• KRAPEZ J C ET AL: "A DOUBLE-WEDGE REFLECTOR FOR EMISSIVITY ENHANCED PYROMETRY" MEASUREMENT SCIENCE AND TECHNOLOGY,GB,IOP PUBLISHING, BRISTOL, vol. 1, no. 9, 1 September 1990 (1990-09-01), pages 857-864, XP000150829 ISSN: 0957-0233
• PATENT ABSTRACTS OF JAPAN vol. 009, no. 296 (P-407), 22 November 1985 (1985-11-22) -& JP 60 133325 A (CHIYUUGAI RO KOGYO KK), 16 July 1985 (1985-07-16)
• PATENT ABSTRACTS OF JAPAN vol. 008, no. 242 (P-311), 7 November 1984 (1984-11-07) -& JP 59 116516 A (KAWASAKI SEITETSU KK), 5 July 1984 (1984-07-05)

**Description**

The present invention relates to a method and apparatus for measuring the temperature of an aluminium billet.

When billets of aluminium are being transported to an extrusion press for subsequent processing, it is useful to be able to determine the temperature of the billet. Currently, this is achieved using a thermocouple device which is placed in contact with the surface of the billet to thereby determine the temperature.

However, this method suffers from a number of drawbacks. Firstly, the billet must be stopped to enable a temperature measurement to be taken. This can lead to cooling of the billet as well as slowing down the rate at which billets can be processed. This is worsened by the fact that it is necessary to determine temperature variations along the billet, meaning measurements must be repeated at several locations along the billet surface. In addition to this, the thermocouples are generally not very reliable and require frequent replacement thereby making the apparatus expensive to maintain.

Non-contact temperature monitoring is known in conjunction with continuous rolling mills as described in a variety of papers. These include Tychowsky, V W, et al: "Development and Application of a Gold Cup Sensor for Measurement of Strip Temperatures on a Continuous Galvanizing Line", Iron and Steel Engineer, US, Association of Iron and Steel Engineers, Pittsburgh, Vol, 75, No. 9, 1 September 1998 (1988-09-01), pages 37-42; EP-A-0942269 (Land Instruments International Ltd), 15 September 1999 (1999-09-15); Kirby, P J: "Measuring Hot Metals on the Move", I & CS - Industrial and Process Control Magazine, US, Chilton Company, Radnor, Pennsylvania, Vol. 65, No. 6, 1 June 1992 (1992-06-01), pages 25-28; US-A-5326173; Dan Evans et al: "Non Contact Sensor for Aluminum Rolling Mills", Advances in Instrumentation and Control, US, Instrument Society of America, Research Triangle Park, Vol. 49, No. Part 03, 23 October 1994 (1994-10-23), pages 1153-1163; and Krapez, J C et al: "A Double-Wedge Reflector for Emissivity Enhanced Pyrometry", Measurement Science and Technology, GB, IOP Publishing, Bristol, Vol. 1, No. 9, 1 September 1990 (1990-09-01), pages 857-864.

In accordance with a first aspect of the present invention, we provide a method with the steps defined by claim 1.

In accordance with a second aspect of the present invention, we provide an apparatus with the features defined by claim 5.

Thus, the present invention provides apparatus and a method for remotely measuring the temperature of an aluminium billet. This is achieved by using an emissivity enhancer to enhance the radiation emitted by the billet, allowing a detector to determine the billet temperature by remotely sensing the emitted radiation. This is particularly important for aluminium billets which have a variable emissivity and therefore emit a variable amount of radiation in proportion to their temperature. This has the advantage that the temperature can be measured whilst the billet is moving, thereby increasing the rate at which the billets can be processed.

Typically the surface of the reflector is gold plated as this has a high and stable reflectivity. However, alternative materials having a high and stable reflectivity such as silver or aluminum may also be used.

Typically the apparatus further comprises a protective member for enclosing the shaped radiation reflector of the emissivity enhancer, the protective member being transmissive to the radiation. The protective member is particularly advantageous as it prevents the reflective surface becoming dirty. However, an alternative to the use of a protective member is simply to clean the surface of the reflector at regular intervals.

Typically the protective member comprises a window extending across the shaped radiation reflector. However, the protective member may alternatively comprise a surface coating on the surface of the reflector.

The protective member has an inner surface facing the shaped radiation reflector and an outer surface which faces the billet in use. In this case the apparatus usually further comprises an air purge for directing air across the outer surface of the protective member. This helps reduce the build up of dirt on the protective member thereby reducing the frequency with which the protective member must be cleaned.

Typically the detector comprises one or more photovoltaic diodes. Thus a Germanium detector, an Indium Galium Arsenide (InGaAs) or a silicon detector may be used. In the latter case the detector would only be usable with radiation having a wavelength in visible to 1.1 micron range, which would limit the lowest temperature detectable to about 350°C.

Preferably the indication of the temperature of the billet includes a graphical display of the temperature profile along the length of the billet. However, a numerical indication of the temperature of the billet at various points, as well as an indication of the minimum and/or maximum temperature may be provided.

The apparatus is used to detect the temperature of aluminum billets. This is because aluminum billets have a variable emissivity and their temperature is therefore difficult to detect.

Typically the apparatus further comprises a filter positioned between the detector and the emissivity enhancer for limiting the radiation detection to the range 0.8 to 1.8 microns in wavelength.

However, detection of radiation in the wavelength bands 0.8 to 1.8 microns, alternatively may be achieved by placing an array of detective elements behind a dispersive element, such as a prism or diffraction grating, or by using multiple detective elements and spectral filters in combination with an optical beamsplitter, or by mounting two detective elements with different spectral responses in "tandem" such that radiation passing through the first element is detected by the second, or by mounting a rotating wheel holding different spectral filters in front of a single detective element.

More specifically the detector is preferably adapted to detect a single waveband of 1.6 microns, as this provides the most reliable readings.

The detector usually generates analogue signals. In this case, the sampling of the signals further comprises the steps of amplifying signals generated by the detector; and digitizing the amplified signals at predetermined time intervals. However, it will be realised that processing may be carried out directly on the analogue signals in which case the digitising step is not required.

Preferably, the temperature is determined at regular intervals along the length of the billet. Accordingly, a temperature profile representing variations in temperature along the length of the billet can be generated.

Preferably the method comprises generating and displaying a graphical representation of the temperature profile. However, alternatively a sequence of numerical values representing the variation in temperatures along the length of the billet could be output.

The step of determining the temperature typically comprises modifying the digitised signals in accordance with a number of predetermined coefficients such that the modified signals represent the temperature of the billet. Coefficients can therefore be predetermined when the apparatus is initially configured thereby ensuring that the determined temperature is an accurate representation of the temperature of the billet. However, alternative methods can also be used, such as using the digitized signals to access a look-up table which provides an indication of the temperature represented by the signal.

It will be realised that the method of the second aspect of the invention can be performed using the apparatus of the first aspect of the invention.

Examples of the present invention will now be described with reference to the accompanying drawings, in which:-

Figure 1 is a schematic diagram of a first example of apparatus according to the present invention for detecting the temperature of a billet;
Figure 2 is a schematic diagram of a second example of apparatus according to the present invention for detecting the temperature of a billet;
Figure 3 is a schematic diagram of a modified version of the apparatus of Figure 1;
Figure 4 is a schematic diagram of an alternative surface reflector for use in the apparatus of Figures 1 to 3;
Figure 5 is a schematic diagram of the processor used in apparatus according to the present invention; and,
Figure 6 is a schematic diagram of a modified version of the apparatus of Figure 1 using an alternative processing arrangement.

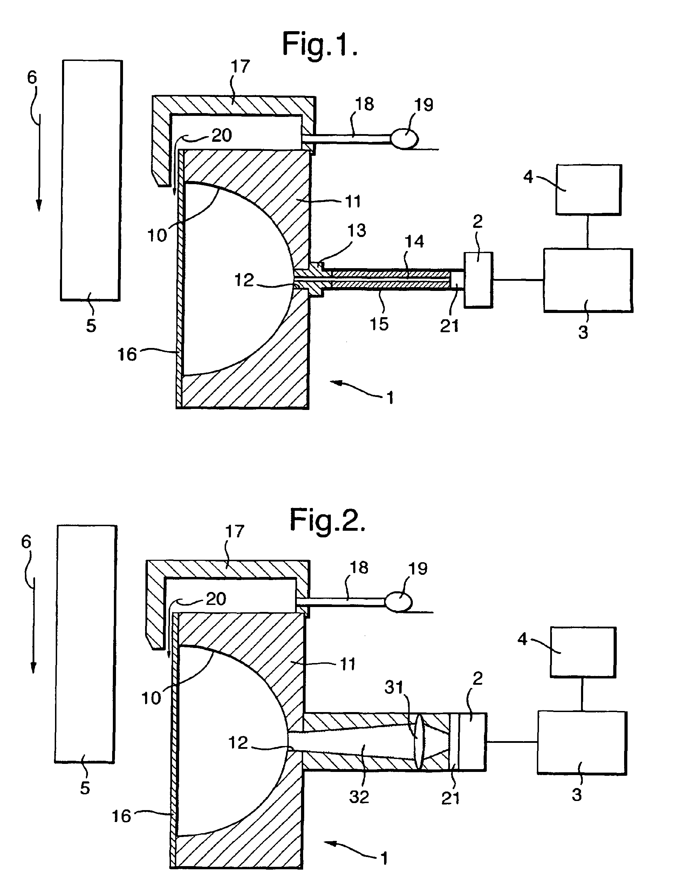

Figure 1 shows a first example of the present invention which includes an emissivity enhancer, shown generally at 1 coupled to a detector 2, which is in turn coupled to a processor 3 and a display 4.

In use, an aluminum billet 5 is transported past the emissivity enhancer 1 in the direction of arrow 6 using transport apparatus (not shown). As the billet passes the emissivity enhancer 1, radiation is collected by the emissivity enhancer and transferred to the detector 2.

The detector 2 generates electrical signals representative of the amount of infra-red radiation impinging thereon. Whilst the detector 2 may be adapted to detect radiation at only a single wavelength, in the present example, the detector operates to detects radiation at several different wavelengths. This is achieved using an array of detector elements (not shown), such as germanium photovoltaic diodes, each of which is adapted to detect radiation at a different wavelength. The diodes are positioned next to a prism or a diffraction grating, such that radiation of the waveband to be detected is directed on to the respective diode.

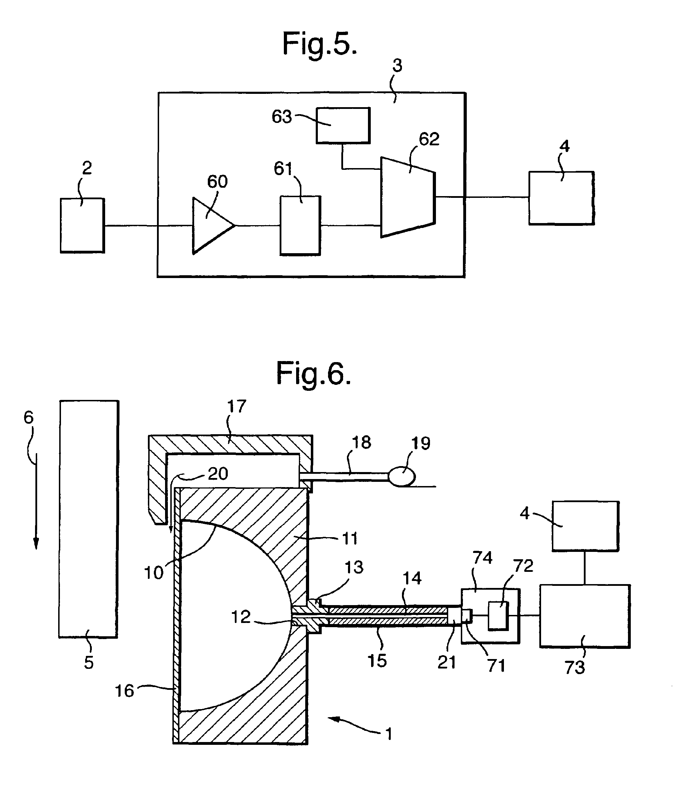

The signals generated by the detector are used by the processor 3 to determine the temperature of the aluminium billet 5. The processor 3, which is shown in more detail in Figure 5, includes an amplifier 60 coupled to the detector 2 and an analogue-to-digital converter 61. The output of the converter 61 is coupled to a multiplier 62 which is also coupled to a memory 63 and the display 4, as shown.

Signals received from the detector are amplified by the amplifier 60 and then digitised at regular intervals by the convertor 61. The digitised signals are scaled by the multiplier 62 in accordance with coefficients stored in memory 63, before being displayed on the display 4.

The display 4 may comprise a graphical display, in which case a graphical representation of the temperature profile along the length of the billet 5 is generated. Alternatively, the display 4 may simply be a text display in which case an indication of the maximum, minimum, and/or mean temperatures can be displayed.

The emissivity enhancer 1 will now be described in more detail. The emissivity enhancer includes a shaped reflector surface 10 which is formed by gold plating the surface of a main housing 11. An aperture 12 is provided in the rear portion of the reflector surface 10 and positioned therein is a ferrule 13. The ferrule is used to mount a fibreoptic cable 14 which couples the aperture 12 to the detector 2. The fibreoptic cable is generally enclosed within a protective rubber sheath 15.

Mounted across the front of the housing 11 is a protective window 16 which is generally formed from Pyrex glass, or the like. The protective window is used to protect the gold plated surface reflector 10 from the effects of dirt, as well as to prevent the reflector surface from being scratched or damaged.

Optionally, a filter 21 can be positioned between the aperture 12 and the detector 2, so as to filter out wavelengths of radiation, such as visible or UV radiation which are not used for detection purposes. The filter is usually a bandpass filter designed to transmit radiation having wavelengths in the range 0.8 to 1.8 microns. In this case, the filter 21 is mounted between the fibreoptic cable 14 and the detector 2, as shown.

Mounted on one edge of the housing 11 is an air purge system formed from a housing 17 connected via a tube 18 to an air pump 19. This is used to stop the protective window 16 of the emissivity enhancer 1 becoming dirty over time, which would reduce the amount of radiation which can be transmitted through the protective window 16. This is achieved by having the air pump 19 pump clean air via the tube 18 into the housing 17. This air is then directed as shown by the arrows 20 across the surface of the window 16. This helps remove dirt from the region immediately in front of the window 16, thereby helping prevent the build up of dirt on the window.

Operation of the system will now be described. The amount of radiation emitted by the billet 5 depends on its temperature, its emissivity and the wavelength band considered.

For the case in which the detector detects a single wavelength of radiation $\lambda$, the signal (S) output from the detector 2 can therefore be written as:

$$S \quad = \quad e \ . \ f(T) \qquad\qquad (1)$$

where: e - emissivity at the wavelength $\lambda$

f(T) - signal which would be obtained for idealised "black" billet at wavelength $\lambda$

Where detection is made in two wavebands $\lambda_1, \lambda_2$ the signal output from the detector includes two components $S_1, S_2$ whose values are given by the equations:

$$S_1 \quad = \quad e_1 \ . \ f_1(T) \qquad\qquad (2)$$

$$S_2 \quad = \quad e_2 \ . \ f_2(T) \qquad\qquad (3)$$

where: $e_1$ - emissivity value at wavelength $\lambda_1$

$e_2$ - emissivity value at wavelength $\lambda_2$

$f_1(T)$ - signal which would be obtained for idealised "black" billet at wavelength $\lambda_1$

$f_2(T)$ - signal which would be obtained for idealised "black" billet at wavelength $\lambda_2$

(The situation is similar for 3 or more wavebands)

The functions $f(T), f_1(T), f_2(T)$ are readily determined empirically by allowing the instrument to view black body calibration sources of known temperature.

To use the instrument to determine the temperature of the billet 5 it is necessary to know something about the emissivity values of the billet. When only one detection waveband is used, it is necessary to know the emissivity value appropriate to that waveband. However, when two wavebands are used it suffices to know a functional relationship between the emissivity in the two wavebands, as given by the following equation:

$$e_2 \quad = \quad F(e_1) \qquad\qquad (4)$$

In this case, three equations (2), (3) and (4) are provided which interrelate the unknowns $e_1, e_2, T$. This allows the unknown values to be eliminated from the equations so that the temperature can be determined.

It should be noted however, that erroneous assumptions about the emissivities can lead to errors in the derived temperatures.

In the absence of the shaped reflector the effective emissivity values are just the surface emissivities of the billet 5. These can vary appreciably from billet to billet, due to variations in chemical make-up and surface conditions.

However, the reflector surface 10 enhances the effective emissivity values towards that of an isothermal cavity (or idealised "black" body), in which case the emissivity approaches unity.

This is achieved by creating a situation of multiple radiation reflections between the surface of the billet 5 and the reflector surface 10. In the limiting case (not achieved in practice), where radiation is fully trapped between a perfect reflector surface 10 and the surface of the billet 5 then the effective emissivity value becomes unity irrespective of the wavelength of the emitted radiation and irrespective of the surface condition of the billet.

In practice the reflector surface 10 is imperfect and there is "leakage" of radiation so that the effective emissivity values of exactly unity are not achieved. However the variations from billet to billet are very much suppressed.

This means that if reasonable emissivity values, based on a priori experimentation, are built into the instrument, then highly accurate temperatures are consistently obtained despite appreciable billet-to-billet variations in chemical make-up and surface condition.

Accordingly, at least some of the radiation entrained in the cavity between the billet 5 and the reflector surface 10 is transmitted through the protective window 16 and is incident on the aperture 12. This is then transmitted by the fibreoptic cable 14 to the detector 2.

As mentioned above, the signals output from the detector 2 are amplified by the amplifier 60 before being digitised by the analogue-to-digital convertor 61. The convertor 61 is usually a 16-bit analogue-to-digital convertor which is operated so as to periodically sample the amplified signals. The convertor 61 therefore outputs a 16-bit digital signal representative of the magnitude of radiation detected by the detector 2 at the time of sampling.

The digitized signals are transferred to the multiplier 62 which operates to multiply the signals in accordance with coefficients stored in the memory 63. These coefficients are known as responsivity correction factor (RCF) coefficients and are selected so that the signal obtained by the detector is modified as required by equations (1), (2), (3), (4) so that the signal output from the multiplier 62 is representative of the temperature of the billet 5.

As will be appreciated by a person skilled in the art, the RCF coefficients are initially determined by calibrating the detector during an initialisation process. In this case, the detector 2 would be used to detect radiation emitted from black bodies having a known temperature and a known emissivity. The RCF coefficients are then calculated, based on equations (1), (2), (3), (4) so as to ensure that the correct temperature is output from the multiplier 62.

This will also be repeated for a number of different bodies having different emissivities. This allows a respective set of RCF coefficients to be determined for a given emissivity. Accordingly, when measurements are being made, the emissivity of the sample to be measured can be specified so that the appropriate set of RCF coefficients are used, thereby ensuring the correct temperature is determined.

Accordingly, in the present example, the total amount of radiation which impinges on the detector 2 is greater than would have occurred had the emissivity enhancer 1 not been present. Thus the effective emissivity of the body is enhanced. Accordingly, the RCF coefficients used by the multiplier 62 are selected in accordance with the effective emissivity of the billet. This value will depend on the emissivity enhancer used and in particular the shape of the reflector profile and the distance between the billet 5 and the emissivity enhancer 1. In the present example, the reflector uses a hyperbolic shaped reflector having a diameter at the protective window 16 of about 50mm. The billet is located approximately 15mm from the protective window 16. The detector operates in a single wavelength band approximately 0.8 to 1.8 microns and preferably at 1.6 microns. This results in an effective emissivity of $\sigma = 0.95$.

Accordingly, the operator will input a value of 0.95 into the processor 3, via an input (not shown). This causes the multiplier 62 to select the set of RCF coefficients associated with an emissivity of 0.95 and which are stored in the memory 63. Accordingly, when the digitized signals output from the converter 61 are multiplied by the multiplier 62 the resulting signal represents the temperature of the billet. These signals are then displayed on the display 4 in such a way so as to represent the temperature profile along the length of the billet at times when the amplified signals were digitized by the converter 61.

The gold plated reflector surface 10 has a hyperbolic profile which allows the distance between the billet 5 and the emissivity enhancer to vary by a substantial amount without adversely effecting the magnitude of the detected radiation.

A second example of the present invention is shown in Figure 2. In this case, the ferrule 13, the fibreoptic cable 14 and the sheath 15 are replaced by a simple sight tube 30. The sight tube operates to optically couple the detector 2 to the aperture 12.

This is achieved by having radiation passing through the aperture 12, as indicated at 32, focussed by a lens 31 located within the sight tube 30. As shown, this focussed radiation then impinges on the detector 2. The filter may also be included in the sight tube 30, as shown. The system then functions as described with respect to Figure 1.

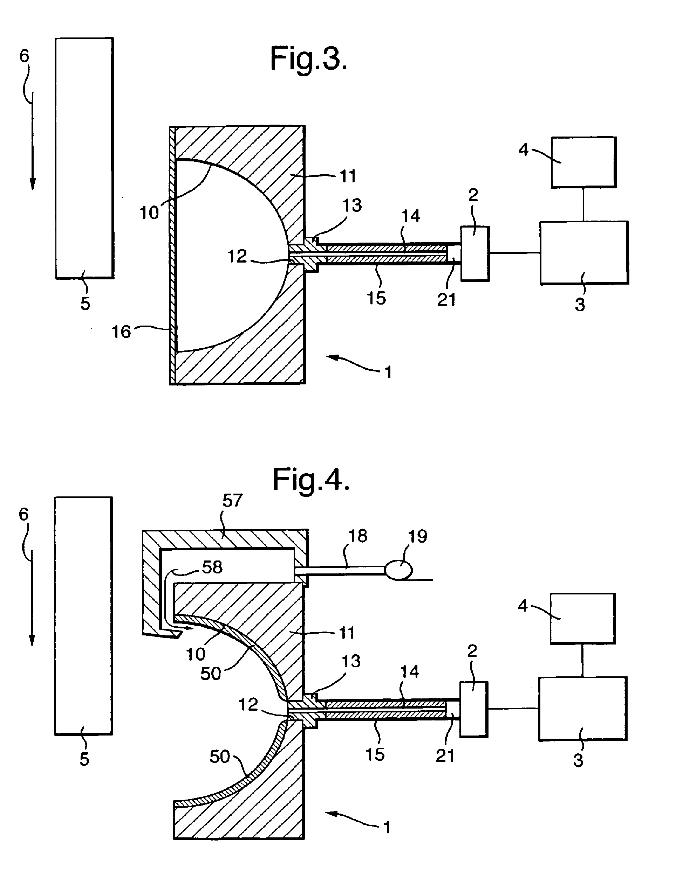

A third example of the present invention is shown in Figure 3. In this case, the apparatus of Figure 1 is modified by the removal of the air purge system. The emissivity enhancer 1 will still function as described with respect to Figure 1, although in this case more frequent cleaning of the protective window 16 would be required. It will be realised that a similar modification could be made to the apparatus of Figure 2.

In Figure 4 an example of an alternative emissivity enhancer for use in any of the above described examples is shown. In this case, the protective window 16 has been removed and replaced by a protective layer 50 which is overlaid on the reflector surface 10 as shown. This is similar in construction to a silvered mirror and therefore allows cleaning of the reflector surface without damaging of the gold plated reflector surface 10.

In this example, the air purge system is modified by the use of an alternative housing 57 which directs air over the protective layer 50, as shown by the arrow 58. Alternatively, however, the air purge system may be omitted and the protective layer 50 cleaned by hand.

An alternative method of processing signals will now be described with reference to Figure 6, which is a modified version of the apparatus of Figure 1. In this example, the detector 74 includes a detector element 71 coupled to an analogue processor, commonly referred to as a "multifunction converter" 72.

The detector element 71 is formed from a germanium photovoltaic diode, which produces a small analogue voltage signal in response to the impinging radiation. The photovoltaic diode is typically configured so as to detect a single waveband, although multiple wavebands could also be detected.

The signals output from the detector element 71 are transferred to the convertor 72 which operates to amplify the signal into a decent-sized voltage signal. This voltage signal is then multiplied by a gain factor 1/e, where e is the value of emissivity (typically 0.95). This value must be set by the user, using an input (not shown).

The modified signal is then logarithmically compressed in accordance with the equation:

$$T = a. S^{\alpha} + b$$

where: S - input signal;
T - output signal;
a - constant
b - constant
$\alpha$ - constant

The constants a, b, $\alpha$ are built into the convertor circuit in the form of resistor values are selected depending on the temperature range to be measured. Preferably, the resistors can be adjusted so that different values are used for the top and bottom halves of the measurement range.

As a result, the convertor 72 outputs a voltage signal which is approximately proportional to the billet temperature (although it may have some distortion since the above equation only approximates Plank's Equation).

The output from the convertor is transferred to a processor 73 which makes a 16 bit analogue-to-digital conversion at about 10 mS intervals. It then calculates billet temperature using a look-up table which corrects the known distortion in the received signal.

The processor 73 then displays the billet temperature on the display 4, in the normal way. This therefore may include an indication of the temperature, or a temperature profile representing variations in the temperature profile along the length of the billet 5.

As will be appreciated, the processing system described with respect to Figure 6 could also be implemented in suitably modified versions of the apparatus of Figures 2, 3 and 4.

**Claims**

1.  A method of processing a billet comprising measuring the temperature of a billet by:

    detecting radiation having a wavelength in the range 0.8 to 1.8 microns emitted by the billet using a detector;
    enhancing the radiation emitted by the billet using an emissivity enhancer the emissivity enhancer having a concave shaped radiation reflector including an aperture which faces the billet in use, the detector being coupled to the aperture via a flexible fibre optic light guide; and,
    processing signals generated by the detector to thereby determine an indication of the temperature of the billet, wherein the billet is an aluminium billet; the detector is positioned remotely from the emissivity enhancer; the radiation reflector of the emissivity enhancer is positioned adjacent and facing the billet; the concave shaped reflector is shaped as a hyperbola; and the temperature measuring method further comprises
    moving the billet relative to the detector;
    sampling the signals generated by the detector;
    determining the temperatures represented by the sampled signals;
    generating an indication of the determined temperatures such that a number of temperature measurements are obtained along the length of the billet as the billet moves relative to the detector;

and in that the method further comprises transporting the billets to an extrusion press.

2. A method according to claim 1, wherein the detector generates analogue signals and wherein the step of sampling the signals further comprises the steps of:

amplifying signals generated by the detector; and,
digitising the amplified signals at predetermined time intervals.

3. A method according to claim 1 or claim 2, wherein the step of generating an indication of the determined temperature comprises generating and displaying a graphical representation of the temperature profile along the length of the billet.

4. A method according to any of the preceding claims, wherein the step of determining the temperature comprises modifying the digitised signals in accordance with a number of predetermined coefficients such that the modified signals represent the temperature of the billet.

5. Apparatus for measuring the temperature of an aluminium billet (5), the apparatus comprising:

a detector (2) for detecting radiation having a wavelength in the range 0.8 to 1.8 microns emitted by the billet;
an emissivity enhancer (1) remote from the detector, facing the billet in use, and coupled to the detector for enhancing the radiation emitted by the billet the emissivity enhancer having a concave shaped radiation reflector (10) including an aperture (12) which faces the billet in use;
a light guide (14) for coupling the detector (2) to the aperture (12);
a processor (3) responsive to the detector for generating an indication of the temperature of the billet, wherein the apparatus further comprises means for moving the billet relative to the detector; and the light guide (14) is formed from a flexible fibre optic cable; and the concave shaped surface (10) is hyperbolic; and the processor is adapted to carry out the following steps:

sampling the signals generated by the detector,
determining the temperatures represented by the sampled signals, and,
generating an indication of the determined temperatures such that a number of temperature measurements are obtained along the length of the billet as the billet moves relative to the detector;
and wherein the apparatus comprises an aluminium extrusion press to which billets are transported.

6. Apparatus according to claim 5, wherein the surface of the reflector (10) is gold plated.

7. Apparatus according to claim 5 or claim 6, the apparatus further comprising a protective member (16) for enclosing the shaped radiation reflector (10) of the emissivity enhancer, the protective member being transmissive to the radiation.

8. Apparatus according to claim 7, the protective member (16) comprising a window extending across the shaped radiation reflector.

9. Apparatus according to claim 7 or claim 8, the protective member (16) having an inner surface facing the reflective surface (10) and an outer surface which faces the billet (5) in use, the apparatus further comprising an air purge (17) for directing air across the outer surface of the protective member.

10. Apparatus according to any of claims 5 to 9, wherein the detector (2) comprises one or more photovoltaic diodes.

11. Apparatus according to any of claims 5 to 10, wherein the indication of the temperature of the billet includes a graphical display of the temperature profile along the length of the billet.

12. Apparatus according to any of claims 5 to 11, wherein the detector (2) is adapted to detect a single waveband of approximately 1.6 microns.

13. Apparatus according to any of claims 5 to 12, wherein the detector is one of an InGA or germanium detector.

14. Apparatus according to any of claims 5 to 13, the apparatus further comprising a filter positioned between the detector and the emissivity enhancer for limiting the radiation detection to the range 0.8 to 1.8 microns in wavelength.

**EP 1 103 801 B1**

**Patentansprüche**

1. Verfahren zum Bearbeiten eines Rohlings, umfassend das Messen der Temperatur eines Rohlings durch:

Erfassen einer Strahlung mit einer Wellenlänge im Bereich 0,8 bis 1,8 Mikrometer, die vom Rohling emittiert wird, unter Verwendung eines Detektors;
Verstärken der von dem Rohling emittierten Strahlung unter Verwendung eines Emissionsgradverstärkers, wobei der Emissionsgradverstärker einen konkav geformten Strahlungsreflektor aufweist, der eine Öffnung umfasst, die dem Rohling in Verwendung zugewandt ist, wobei der Detektor über einen flexiblen Glasfaserlichtleiter mit der Öffnung gekoppelt ist; und
Bearbeiten von Signalen, die von dem Detektor erzeugt werden, um dadurch eine Angabe der Temperatur des Rohlings zu bestimmen, wobei der Rohling ein Aluminiumrohling ist, der Detektor entfernt von dem Emissionsgradverstärker positioniert ist, der Strahlungsreflektor des Emissionsgradverstärkers dem Rohling benachbart positioniert und diesem zugewandt ist; der konkav geformte Reflektor als Hyperbel geformt ist und das Temperaturmessverfahren weiterhin umfasst
Bewegen des Rohlings relativ zu dem Detektor;
Abfragen der von dem Detektor erzeugten Signale;
Bestimmen der Temperaturen, die von den abgefragten Signalen wiedergegeben werden;
Erzeugen einer Angabe der bestimmten Temperaturen derart, dass eine Anzahl von Temperaturmessungen entlang der Länge des Rohlings erhalten wird, wenn sich der Rohling relativ zu dem Detektor bewegt; und wobei das Verfahren weiterhin das Transportieren der Rohlinge an eine Extrusionspresse umfasst.

2. Verfahren nach Anspruch 1, wobei der Detektor analoge Signale erzeugt und wobei der Schritt des Abfragens der Signale weiterhin folgende Schritte umfasst:

Verstärken der von dem Detektor erzeugten Signale; und
Digitalisieren der verstärkten Signale zu vorbestimmten Zeitintervallen.

3. Verfahren nach Anspruch 1 oder Anspruch 2, wobei der Schritt des Erzeugens einer Angabe der bestimmten Temperatur das Erzeugen und Anzeigen einer graphischen Wiedergabe des Temperaturprofils entlang der Länge des Rohlings umfasst.

4. Verfahren nach einem der vorstehenden Ansprüche, wobei der Schritt des Bestimmens der Temperatur ein solches Modifizieren der digitalisierten Signale in Übereinstimmung mit einer Anzahl von vorbestimmten Koeffizienten umfasst, dass die modifizierten Signale die Temperatur des Rohlings wiedergeben.

5. Vorrichtung zum Messen der Temperatur eines Aluminiumrohlings (5), wobei die Vorrichtung umfasst:

einen Detektor (2) zum Erfassen von Strahlung mit einer Wellenlänge im Bereich 0,8 bis 1,8 Mikrometer, die von dem Rohling emittiert wird;
einen Emissionsgradverstärker (1), der von dem Detektor entfernt ist, dem Rohling in Verwendung zugewandt ist und mit dem Detektor zum Verstärken der von dem Rohling emittierten Strahlung gekoppelt ist, wobei der Emissionsgradverstärker einen konkav geformten Strahlungsreflektor (10) aufweist, der eine Öffnung (12) umfasst, die dem Rohling in Verwendung zugewandt ist;
einen Lichtleiter (14) zum Koppeln des Detektors (2) mit der Öffnung (12);
einen Prozessor (3), der auf den Detektor reagiert, zum Erzeugen einer Angabe der Temperatur des Rohlings, wobei die Vorrichtung weiterhin Mittel zum Bewegen des Rohlings relativ zu dem Detektor umfasst; und wobei der Lichtleiter (14) aus einem flexiblen Glasfaserkabel gebildet ist; und wobei die konkav geformte Oberfläche (10) hyperbolisch ist; und wobei der Prozessor eingerichtet ist, um die folgenden Schritte auszuführen:
Abfragen der von dem Detektor erzeugten Signale,
Bestimmen der von den abgefragten Signalen wiedergegebenen Temperaturen und
Erzeugen einer Angabe der bestimmten Temperatur derart, dass eine Anzahl von Temperaturmessungen entlang der Länge des Rohlings erhalten wird, wenn sich der Rohling relativ zu dem Detektor bewegt; und wobei die Vorrichtung eine Aluminiumextrusionspresse umfasst, an die die Rohlinge transportiert werden.

6. Vorrichtung nach Anspruch 5, wobei die Oberfläche des Reflektors (10) vergoldet ist.

7. Vorrichtung nach Anspruch 5 oder Anspruch 6, wobei die Vorrichtung weiterhin ein Schutzelement (16) zum Umgeben des geformten Strahlungsreflektors (10) des Emissionsgradverstärkers umfasst, wobei das Schutzelement für die Strahlung durchlässig ist.

8. Vorrichtung nach Anspruch 7, wobei das Schutzelement (16) ein Fenster umfasst, das sich über den geformten Strahlungsreflektor erstreckt.

9. Vorrichtung nach Anspruch 7 oder Anspruch 8, wobei das Schutzelement (16) eine Innenfläche, die der reflektierenden Oberfläche (10) zugewandt ist, und eine Außenfläche, die dem Rohling (5) in Verwendung zugewandt ist, aufweist, wobei die Vorrichtung weiterhin einen Luftreiniger (17) umfasst, um Luft über die Außenfläche des Schutzelements zu lenken.

10. Vorrichtung nach einem der Ansprüche 5 bis 9, wobei de Detektor (2) eine oder mehrere Photovoltaikdioden umfasst.

11. Vorrichtung nach einem der Ansprüche 5 bis 10, wobei die Angabe der Temperatur des Rohlings eine graphische Anzeige des Temperaturprofils entlang der Länge des Rohlings umfasst.

12. Vorrichtung nach einem der Ansprüche 5 bis 11, wobei der Detektor (2) eingerichtet ist, um ein einzelnes Wellenband von etwa 1,6 Mikrometer zu erfassen.

13. Vorrichtung nach einem der Ansprüche 5 bis 12, wobei der Detektor ein InGA- oder Germaniumdetektor ist.

14. Vorrichtung nach einem der Ansprüche 5 bis 13, wobei die Vorrichtung weiterhin einen Filter umfasst, der zwischen dem Detektor und dem Emissionsgradverstärker positioniert ist, um die Strahlungserfassung auf den Wellenlängenbereich 0,8 bis 1,8 Mikrometer zu begrenzen.

**Revendications**

1. Procédé de traitement d'une billette comprenant la mesure de la température d'une billette par :

   détection des rayonnements ayant une longueur d'onde dans la plage de 0,8 à 1,8 microns émis par la billette, à l'aide d'un détecteur ;
   amplification des rayonnements émis par la billette à l'aide d'un amplificateur d'émissivité, l'amplificateur d'émissivité comportant un réflecteur de rayonnements de forme concave comprenant une ouverture orientée vers la billette en cours d'utilisation, le détecteur étant couplé à l'ouverture par le biais d'un guide d'ondes optiques en fibres optiques flexibles ; et
   traitement des signaux produits par le détecteur pour déterminer ainsi une indication de la température de la billette, dans lequel la billette est une billette en aluminium ; le détecteur est placé à distance de l'amplificateur d'émissivité ; le réflecteur de rayonnements de l'amplificateur d'émissivité est placé à côté de la billette et est orienté vers celle-ci ; le réflecteur de forme concave est façonné en une hyperbole ; et le procédé de mesure de la température comprend en outre
   le déplacement de la billette par rapport au détecteur ;
   l'échantillonnage des signaux générés par le détecteur ;
   la détermination de la température représentée par les signaux échantillonnés ;
   la production d'une indication des températures déterminées de manière à ce qu'un certain nombre de mesures de températures soit obtenu sur la longueur de la billette au fur et à mesure que la billette se déplace par rapport au détecteur ;
   et en ce que le procédé comprend en outre le transport des billettes vers une presse de filage.

2. Procédé selon la revendication 1, dans lequel le détecteur génère des signaux analogiques et dans lequel l'étape d'échantillonnage des signaux comprend en outre les étapes :

   d'amplification des signaux générés par le détecteur ; et
   de numérisation des signaux amplifiés à des intervalles de temps prédéterminés.

3. Procédé selon la revendication 1 ou la revendication 2, dans lequel l'étape de production d'une indication de la température déterminée comprend la production et l'affichage d'une représentation graphique du profil de température le long de la longueur de la billette.

4. Procédé selon l'une quelconque des revendications précédentes, dans lequel l'étape de détermination de la température comprend la modification des signaux numérisés selon un nombre de coefficients prédéterminés de manière à ce que les signaux modifiés représentent la température de la billette.

5. Appareil de mesure de la température d'une billette en aluminium (5), l'appareil comprenant :

un détecteur (2) pour détecter les rayonnements ayant une longueur d'onde dans la plage de 0,8 à 1,8 microns émis par la billette ;
un amplificateur d'émissivité (1) distant du détecteur, orienté vers la billette utilisée et couplé au détecteur pour amplifier les rayonnements émis par la billette, l'amplificateur d'émissivité ayant un réflecteur de rayonnements de forme concave (10) comprenant une ouverture (12) orientée vers la billette utilisée ;
un guide d'ondes optiques (14) destiné à coupler le détecteur (2) à l'ouverture (12) ;
un processeur (3) réagissant au détecteur pour produire une indication de la température de la billette
dans lequel l'appareil comprend en outre des moyens de déplacement de la billette par rapport au détecteur ;
et le guide d'ondes optiques (14) est constitué d'un câble en fibres optiques flexibles ; et la surface de forme concave (10) est hyperbolique ; et le processeur est conçu pour effectuer les étapes suivantes :

échantillonner les signaux produits par le détecteur,
déterminer les températures représentées par les signaux échantillonnés, et
générer une indication des températures déterminées de manière à ce qu'un certain nombre des mesures de températures soit obtenu le long de la longueur de la billette au fur et à mesure que la billette se déplace par rapport au détecteur ;
et dans lequel l'appareil comprend une presse à étirer l'aluminium vers laquelle les billettes sont transportées.

6. Appareil selon la revendication 5, dans lequel la surface du réflecteur (10) est plaquée or.

7. Appareil selon la revendication 5 ou la revendication 6, l'appareil comprenant en outre un élément protecteur (16) pour enfermer le réflecteur de rayonnements façonné (10) de l'amplificateur d'émissivité, l'élément protecteur transmettant les rayonnements.

8. Appareil selon la revendication 7, l'élément protecteur (16) comprenant une fenêtre s'étendant à travers le réflecteur de rayonnements façonné.

9. Appareil selon la revendication 7 ou la revendication 8, l'élément protecteur (16) ayant une surface intérieure orientée vers la surface réfléchissante (10) et une surface extérieure orientée vers la billette (5) utilisée, l'appareil comprenant en outre un système de purge d'air (17) pour diriger l'air à travers la surface extérieure de l'élément protecteur.

10. Appareil selon l'une quelconque des revendications 5 à 9, dans lequel le détecteur (2) comprend une ou plusieurs diode(s) photovoltaïque(s).

11. Appareil selon l'une quelconque des revendications 5 à 10, dans lequel l'indication de la température de la billette comprend un affichage graphique du profil de température sur la longueur de la billette.

12. Appareil selon l'une quelconque des revendications 5 à 11, dans lequel le détecteur (2) est conçu pour détecter une gamme d'ondes unique d'environ 1,6 microns.

13. Appareil selon l'une quelconque des revendications 5 à 12, dans lequel le détecteur est l'un d'un détecteur en InGA ou en germanium.

14. Appareil selon l'une quelconque des revendications 5 à 13, l'appareil comprenant en outre un filtre placé entre le détecteur et l'amplificateur d'émissivité pour limiter la détection des rayonnements à la plage de 0,8 à 1,8 microns de longueur d'onde.

### Fig.1.

### Fig.2.

## Fig.3.

## Fig.4.

# Fig.5.

# Fig.6.